# EUROPEAN PATENT SPECIFICATION

(11) **EP 2 460 335 B1**
(45) Date of publication and mention of the grant of the patent: **01.05.2013**
(21) Application number: 09781365.3
(22) Date of filing: 31.07.2009
(51) Int. Cl.: H04L 29/08, H04W 8/12, H04L 29/12

(54) **LOCATING SUBSCRIPTION DATA IN A MULTI-TENANT NETWORK**
ORTUNG VON SUBSKRIPTIONSDATEN IN EINEM NETZWERK MIT MEHREREN INHABERN
LOCALISATION DE DONNÉES D'ABONNEMENT DANS UN RÉSEAU MULTIPROPRIETAIRE

(43) Date of publication of application: 06.06.2012
(73) Proprietor: Telefonaktiebolaget LM Ericsson (publ), 164 83 Stockholm (SE)
(72) Inventor: CECILIA TORRALBA, Fernando, ESC. A 7oA 28045 (ES); RAMOS ROBLES, Luis, 28820 Coslada Madrid (ES)
(74) Representative: Tonscheidt, Andreas
(86) International application number: PCT/EP2009/059964
(87) International publication number: WO 2011/012170

(56) References cited:
- WO-A1-2007/144681
- WO-A1-2009/080095
- WO-A1-2009/080118
- US-A1- 2002 147 845
- US-A1- 2008 311 917

## Description

### Technical Field

The present invention relates to techniques for locating subscription data in a multi-tenant network.

### Background

Multi-tenancy refers to a principle, e.g. in software architecture or telecommunication networks, where a single infrastructure is made available to multiple clients, referred to as tenants. In telecommunication networks, a tenant may be a network operator, e.g. a Virtual Network Operator (VNO) or a country-specific operating company of a multi-country network.

A VNO is a company that provides telecommunication services but does not necessarily have the entire infrastructure required to provide these services. Moreover, for mobile services, the VNO typically does not have its own licensed radio frequency allocation. Instead, the VNO makes use of network resources provided by another network operator, based on a commercial agreement between the VNO and this network operator.

A multi-country network operator is one that offers its services in different countries, typically through country-specific operating companies which are locally based in each of these countries. A multi-country network scenario thus refers to a deployment in which, for optimization of network resources, the multi-country network operator shares part of the network infrastructure between a number of countries, i.e. between different country-specific operating companies.

In a multi-tenant network, a given network resource, also referred to as a network instance, is thus shared by multiple tenants. The network operator running the shared network resource may be referred to as a "vendor". In a VNO scenario, the vendor makes the network resource available to multiple VNOs. In a multi-country network scenario, the vendor will be the operator of the multi-country network and makes the network resource available to multiple country-specific operating companies.

A tenant of the multi-tenant network is a network operator making use of this shared network resource. In the VNO scenario, the tenant will be one of the multiple VNOs. In the multi-country network scenario, the tenant will be a country-specific operating company.

In telecommunication networks, one requirement to multi-tenancy is that the tenants must not be able to see the other tenants' subscription data. This is mostly motivated by personal data protection regulations, where each network operator is made responsible for the protection of its subscribers' data, e.g. to ensure that such data is not accessible by other parties.

This requirement is obvious in the VNO scenario, where it is natural that one network operator should not have access to other operator's subscription data. But even in the multi-country scenario, it is common that regulations in one country require that a network operator in this country does not make its subscription data accessible to other countries' operating companies, even if they all are associated to a single multi-country operator.

Therefore, multi-tenancy solutions need to provide mechanisms which allow to keep subscription data bases physically or logically separated in such a way that access is only granted to the corresponding network operator or tenant.

For maintaining the subscription data of a network operator, it is known to make use of a Data Layered Architecture (DLA), which refers to an architectural approach for the realization of network functional entities in which data and logic are separated in different layers, e.g. implemented by separate network elements or instances. For example, application data may be hosted in a network element, referred to as back-end (BE), while application logic is hosted in a different network element, referred to as front-end (FE).

This type of architecture has several benefits: Storage requirements, including high availability, can be moved to a "common off-the-shelf' data storage. Further, storage capacity and processing capacity can be scaled independently. Further, storage capacity can be scaled without impacting the clients of the functional entity. That is to say, new servers need not to be defined for each client. Since the FE nodes are data-less, an n+k redundancy approach can be followed, which is more efficient than a regular 1+1 approach. Complexity is reduced since only one entity, i.e. the BE, needs to be provisioned, rather than a number of servers. Moreover, having subscription data for all subscribers of a network operator available at a single entity, i.e. the BE, facilitates evaluation of the subscription data, e.g. by data mining. Also, it is straightforward to add new applications, keeping the data for different applications centralized at the same BE.

A typical DLA is thus composed of an application layer, a data layer, and optionally a distribution layer.

The distribution layer distributes requests to multiple FEs with a mechanism that attempts to achieve a uniform load across all FEs of the corresponding application, e.g. using network elements referred to as load distributors (LDs). Further, the distribution layer hides the structure of the FEs from the clients. LDs can be application-specific, or one type of LD can support several types of applications. The distribution layer may be a dedicated network structure or may be implemented as a part of a signaling network. In some types of networks, e.g. simple or small networks, the distribution layer may be omitted.

The application layer comprises the FEs, which provide application logic. The FEs are data-less, and hence any FE providing application logic for a certain application can process any request related to this application. In the application layer, a provisioning FE may be provided, which offers a provisioning interface with respect to an external system. The provisioning FE may be in charge of validating provisioning orders based on application-specific restrictions, as well as triggering notifications whenever the network needs to be updated due to the provisioning order.

The data layer has the purpose of providing data storage itself. The data layer may use databases offering a high availability, e.g. using geographic redundancy and persistent data storage. The data layer may use data models adapted to different applications and/or data access rules.

In a communication network according to the 3GPP specifications, it is known to maintain the subscription data in a network function referred to as Home Subscriber Server (HSS). In a DLA implementation, the HSS may comprise different network elements, e.g. a LD, one or more FEs, and a BE.

When the number of subscribers of the network exceeds the capacity of a single HSS, multiple HSS nodes may be provided as disclosed a example in US2002/0147845. A network function referred to as Subscription Locator Function (SLF) or as Enhanced Diameter Proxy Agent provides information about the HSS associated with a particular subscriber profile. This solution basically allocates subscribers to as many HSS nodes as needed. The information about which HSS is the one maintaining subscription data of a certain subscriber is stored in the SLF or Diameter Proxy Agent.

Further details on the SLF and the Diameter Proxy Agent can be found in the 3GPP Technical Specifications 23.228, 24.228, 29.228, 29.229.

In a multi-tenant network, it is not possible to fully take advantage of a DLA based implementation of the HSS. This is due to the requirement that subscription databases of different tenants must be physically or logically separated in such a way that access is only granted to the proper tenant. This will typically result in having different HSS entities, one for each tenant, and each of these entities including all DLA layers, i.e. distribution layer, application layer and data layer.

Accordingly, there is a need for techniques which allow for efficiently locating subscription data in a multi-tenant network.

### Summary

According to an embodiment of the invention, a method of locating subscription data in a multi-tenant network is provided. According to this method a request to be processed on the basis of subscription data is received in a network instance shared by multiple tenants. An identity of a tenant-specific data base maintaining the subscription data is obtained, and the identity is embedded in the request. The request is then forwarded to a further network instance. The further network instance is configured to select the tenant-specific database on the basis of the embedded identity.

According to a further embodiment of the invention, a network component is provided. The network component comprises a subscription data locator. The subscription data locator is shared by multiple tenants. The subscription data locator comprises a first interface configured to receive a request to be processed on the basis of subscription data and a second interface configured to forward the request. The subscription data locator is configured to obtain an identity of a tenant-specific data base maintaining the subscription data and to embed the identity into the forwarded request. In this way, a network instance receiving the forwarded request is enabled to select the tenant-specific database on the basis of the embedded identity.

According to a further embodiment of the invention, a further network component is provided. The further network component comprises a data base selector. The data base selector is configured to receive a request to be processed on the basis of subscription data. The data base selector is configured to extract an embedded identity of a tenant-specific data base from the request, and to select the tenant-specific data base corresponding to the extracted identity to be accessed when processing the request.

### Brief Description of the Drawings

Fig. 1 schematically illustrates a multi-tenant network in which concepts according to embodiments of the invention may be applied.
Fig. 2 schematically illustrates a network component according to an embodiment of the invention.
Fig. 3 schematically illustrates a further network component according to an embodiment of the invention.
Fig. 4 schematically illustrates processing of a subscription-data based request according to an embodiment of the invention.
Fig. 5 shows a flowchart illustrating a method of locating subscription data according to an embodiment of the invention.

### Detailed Description of Embodiments

In the following, the invention will be explained in more detail by referring to exemplary embodiments and to the accompanying drawings. The illustrated embodiments relate to locating subscription data in a multi-tenant network, e.g. a communication network according to the 3GPP (Third Generation Partnership Project) specifications. However, it is to be understood that the concepts as described herein may also be applied to other types of multi-tenant networks.

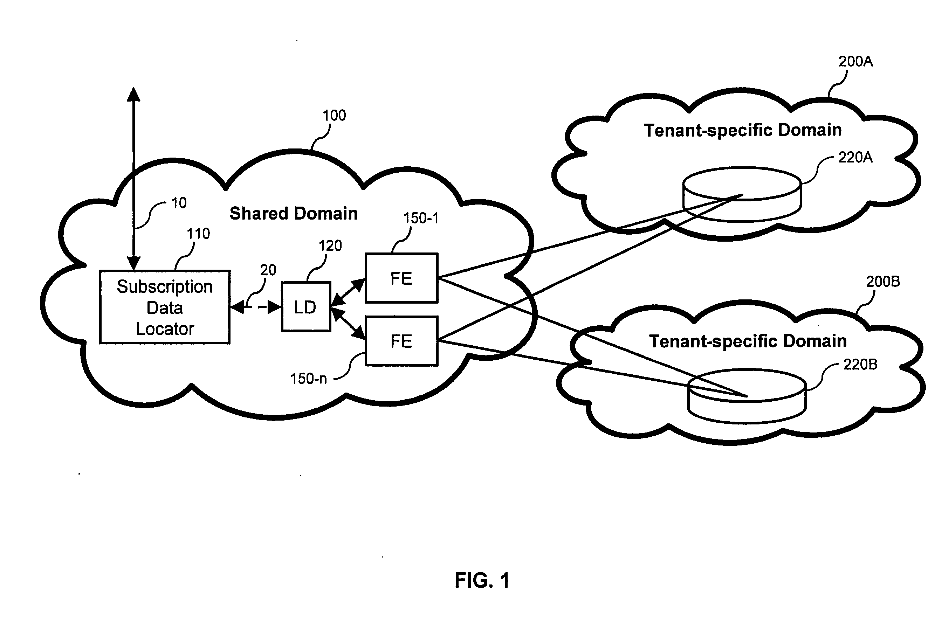

Fig. 1 schematically illustrates a multi-tenant network in which concepts in accordance with embodiments of the invention may be applied.

As illustrated, the multi-tenant network comprises a shared domain 100, a first tenant-specific domain 200A, and a second tenant-specific domain 200B.

The shared domain 100 is shared by multiple tenants. In the illustrated example, the multiple tenants are a first tenant and a second tenant, which may be different VNOs or different country-specific operating companies of a multi-country network.

Network elements in the shared domain 100 process traffic from all tenants of the multi-tenant network. As compared to that, network elements of the tenant-specific domains 200A, 200B are accessible only to the tenant the tenant-specific domain belongs to.

In the following, network elements will be discussed which take part in a process of locating subscription data according to an embodiment of the invention. It is to be understood that the shared domain 100 and the tenant-specific domains 200A, 200B may actually comprise further network elements. Also, it is to be understood that the multi-tenant network may actually be shared by an arbitrary number of tenants and may comprise further tenant-specific domains. In the following, the network elements will also be referred to as network instances. It is to be understood that these network elements or network instances may actually be implemented in separate network components, e.g. in a server or in a blade of a server. However, it is also possible that some network elements or instances are integrated within the same network component. Each network element or instance may be implemented by dedicated hardware or as a software function running on multi-purpose computer hardware.

As illustrated, the shared domain 100 comprises a subscription data locator 110, a load distributor (LD) 120, and a number of FEs 150-1, 150-n. In accordance with the DLA, the FEs may provide application logic for certain applications. The FEs may therefore also be referred to as application logic instances.

The subscription data locator 120 comprises a first interface 10 which is configured to receive requests from a client node (not illustrated). The client node may be located in the shared domain 100 or outside the shared domain 100. The requests are to be processed on the basis of subscription data and may therefore also be referred to as subscription-data based requests. Examples are requests for subscription data or for information determined based on subscription data like access rights or authentication information. In a multi-tenant communication network according to the 3GPP specifications, e.g. a 3GPP network with an IP Multimedia Subsystem (IMS), such clients issuing the requests may be a Call Session Control Function (CSCF), e.g. an Interrogating CSCF (I-CSCF) or a Serving CSCF (S-CSCF). Further, the client may be an application server (AS). The interface 10 may correspond to one of the interfaces as defined in the 3GPP specifications for the HSS, i.e. the interfaces may correspond to a Sh interface with respect to an AS or may correspond to a Cx interface with respect to a S-CSCF or with respect to a I-CSCF. It is, however, also possible to apply the invention in other communication networks, e.g. in an evolved packet core (EPC) where the client may be a Mobile Management Entity (MME).

The subscription data locator 110 further comprises a second interface 20 configured to forward the request received on the first interface 10 to a further network instance. The further network instance is a FE 150-1, 150-n of a HSS function. In the illustrated example, the request is forwarded to the FE 150-1, 150-n via the LD 120. The LD 120 is configured to select one of the FEs 150-1, 150-n to receive the forwarded request. The selection is based on a load distribution mechanism aiming at balanced parallel handling of multiple requests by the FEs 150-1, 150-n. It is to be understood that the FEs 150-1, 150-n as illustrated in Fig. 1 are merely exemplary. In other examples, different numbers of FEs may be provided. The FEs 150-1, 150-n may be application-specific, i.e. may handle only requests related to a certain type of application, or may be configured to handle requests related to different types of applications. In some examples, only one FE may be provided. In such examples, the LD 120 may be omitted and the subscription data locator 110 may directly forward the request to the FE.

The second interface 20 may correspond to one of the interfaces as defined in the 3GPP specifications for the HSS, e.g. to a Cx interface or to a Sh interface. The step of forwarding to the FE may also be performed via the client, e.g. via a Dx or Dh interface if the client is accordingly adapted. However, the former option avoids impacts on the clients.

The tenant-specific domains 200A, 200B each comprise a corresponding tenant-specific database 220A, 220B. That is to say, the first tenant-specific domain 200A comprises a first tenant-specific database 220A, and a second tenant-specific domain 200B comprises a second tenant-specific database 220B. The tenant-specific databases 220A, 220B are used to maintain tenant-specific subscription data. In the tenant-specific database 220A subscription data are maintained which belong to subscribers of the tenant of the first tenant-specific domain 200A. In the second tenant-specific database 220B, subscription data are maintained which belong to subscribers of the tenant of the second tenant-specific domain 200B. Again, it is to be understood that further tenant-specific domains may comprise further corresponding tenant-specific databases. In accordance with the DLA, the tenant-specific databases 220A, 220B may also be referred to as tenant-specific BEs or as data layer instances.

As mentioned above, the subscription-data based request is to be handled on the basis of subscription data, which in the multi-tenant network as illustrated in Fig. 1 is maintained in one of the tenant-specific databases. Accordingly, a mechanism is needed which allows for locating the database 220A, 220B maintaining the subscription data needed for processing the request.

According to an embodiment, the subscription data locator 110 receives the request via the first interface 10 and obtains an identity of the tenant-specific database 220A, 220B maintaining the subscription data needed for processing the request. The identity may be a network address of the database 220A, 220B or the like. An advantageous option is a logical identifier of the database 220A, 220B which allows that the FE maps network addresses to logical identifiers, e.g. based on a mapping table associating logical identifiers and network addresses. Correspondingly, several network addresses can be handled for a database 220A, 220B, e.g. for reasons of redundancy, without having to embed all addresses in the request. The identity is then embedded into the requests, and the request with the embedded identity is forwarded to the FE 150-1, 150-n. As mentioned above, this may also involve selecting one of the FEs 150-1, 150-n on the basis of a load-distribution mechanism.

In the FE 150-1, 150-n, the identity is extracted from the request, and the extracted identity is then used to select the corresponding database 220A, 220B to be accessed when processing the request.

The subscription data locator 110 may obtain the identity of the tenant-specific database on the basis of a subscriber identity included as a parameter in the request. This may be accomplished using a local database of the subscription data locator 110.

As can be seen, the HSS function including the LD 120, the FEs 150-1, 150-n and the tenant-specific databases 220A, 220B is thus located both in the shared domain 100 and in the tenant-specific domains 200A, 200B. Specifically, only network instances belonging to the data layer of the DLA, i.e. the tenant-specific databases 220A, 220B are located outside the shared domain 100.

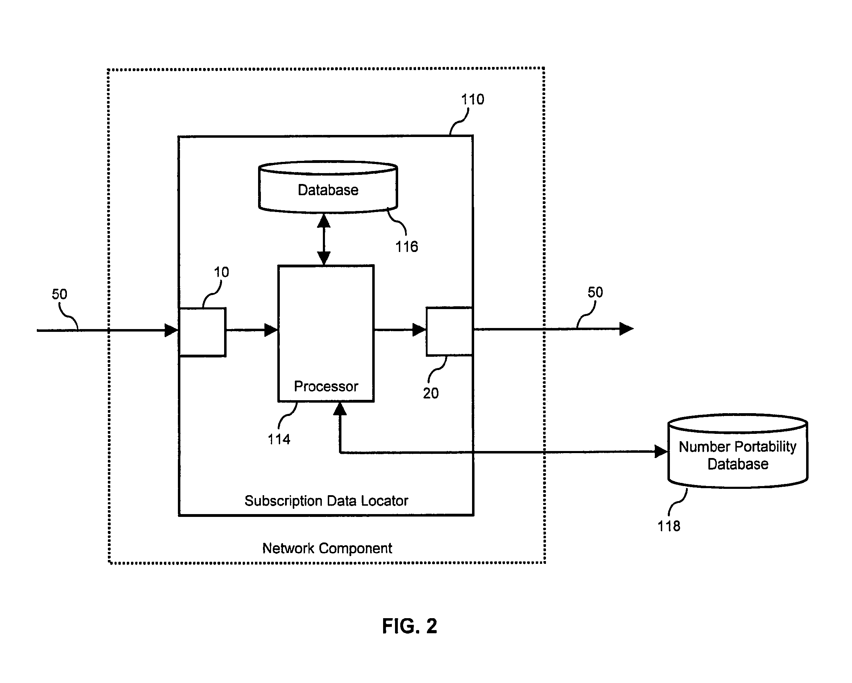

Fig. 2 schematically illustrates a network component including the subscription data locator 110 and further details of the subscription data locator 110.

As illustrated, the request 50 is received via the first interface 10. The subscription data locator 110 comprises a processor 114 which analyzes the request and obtains the identity of the tenant-specific database 220A, 220B, e.g. from a database 116. The identity, e.g. a network address, is then embedded into the request 50, and the request 50 is forwarded via the second interface 20.

As mentioned above, obtaining the identity of the tenant-specific database 220A, 220B may be accomplished on the basis of a subscriber identity, which is a parameter of the request 50. This subscriber identity may be a telephone number, i.e. an International Mobile Subscriber Identity (IMSI), a Mobile Subscriber Integrated Services Digital Network Number (MSISDN), or a uniform resource identifier (URI), e.g. a telephone uniform resource identifier (TEL-URI) or a SIP-URI. The subscriber identity is used as a key for accessing the database 116, which returns the identity of the corresponding tenant-specific database 220A, 220B. This process may also take into account number portability information, e.g. as provided by a number portability database 118.

In Fig. 2, the processor 114 communicates with a number portability database 118 via a corresponding interface of the subscription data locator 110. The number portability database 118 may be a number portability database of known type, e.g. a central database of ported numbers used by multiple network operators. As an alternative, the number portability database 118 may be maintained in the same network as the subscription data locator 110, e.g. as a copy of a central number portability database.

The number portability information in the number portability database 118 addresses a situation arising from subscribers retaining their subscriber identity, i.e. telephone number, when changing from one network operator to another, typically in the same country. The number portability information will thus indicate which subscriber identity has been ported from one network operator to another, the network operator from which the subscriber identity has been ported, typically referred to as "donor", and the network operator to which the subscriber identity has been ported, typically referred to as "recipient".

According to some embodiments, the number portability information may also be maintained in the local database 116 of the subscription data locator 110.

Different types of analysis may be applied when obtaining the identity of the tenant-specific database 220A, 220B on the basis of the subscriber identity.

If the subscriber identity is an IMSI, then the analysis can be based on the leading digits of the IMSI. These leading digits typically contain a mobile country code and a mobile network code, which allow for identifying the tenant. The mobile country code and the mobile network code may therefore be used to identify the tenant-specific database 220A, 220B the IMSI corresponds to.

If the subscriber identity contains a realm part, e.g. a realm part in a Network Access Identifier as defined in IETF RFC 4282, then the analysis can be based on this realm part.

If the subscriber identifier is a MSISDN or a TEL-URI, then the analysis can be based on the leading digits of the subscriber identity, which identifies then network operator the subscriber identity was originally assigned to. In this case, due to number portability, it may occur that the subscriber identity has been ported to a different network operator. In such cases, the leading digits analysis may be supplemented by an analysis taking into account the number portability information as provided by the number portability database 118.

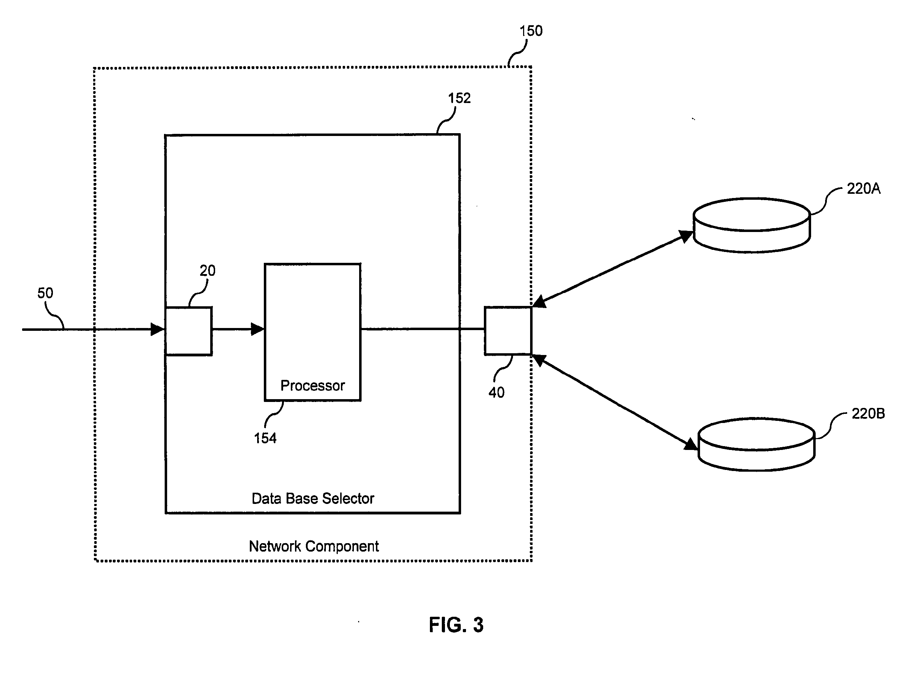

Fig. 3 schematically illustrates a further network component 150 which may be used for implementing one or more of the FEs 150-1, 150-n as illustrated in Fig. 1.

As illustrated, the network component 150 comprises a database selector 152. The database selector 152 comprises an interface 20 configured to receive the request 50 as forwarded by the subscription data locator 110. The database selector 152 further comprises a processor 154. The processor 154 is configured to extract the embedded identity of the tenant-specific database 220A, 220B from the request 50. On the basis of the extracted identity, the corresponding tenant-specific database 220A, 220B is selected to be accessed when processing the request 50. Accessing the database 220A, 220B may be accomplished using a database interface 40 of the network component 150, which is configured to address the tenant-specific database 220A, 220B as identified by the extracted identity. A FE as implemented by the network component 150 is thus aware that there exist different tenant-specific databases 220A, 220B which may be accessed when processing the request 50, and is capable of accessing the correct tenant-specific database on the basis of the identity embedded in the request 50. Processing of the request 50 in the network component 150 may be accomplished by the same processor 154 as used in the database selector 152, or by a different processor (not illustrated).

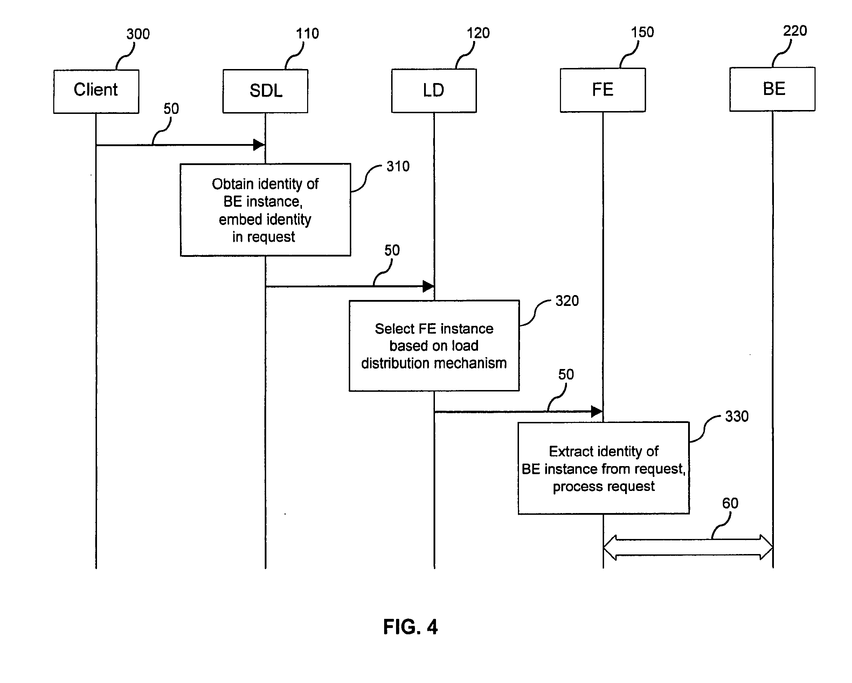

Fig. 4 schematically illustrates a signalling diagram of a process for handling a subscription-data based request in accordance with the above-described concepts. Network elements or instances participating in the process are the client node 300, the subscription data locator (SDL) 110, the LD 120, a FE 150 selected from a number of FEs, and a tenant-specific database 220, also referred to as BE instance.

As mentioned above, the client node 300 may be a S-CSCF, an I-CSCF, or an AS.

The client node 300 issues the subscription-data based request 50 toward the SDL 110. This may be accomplished as described in the 3GPP specifications, e.g. using the Cx interface or the Sh interface. The request 50 includes as a parameter a subscriber identity, e.g. an IMSI, a MSISDN, a TEL-URI, or a SIP-URI. The subscriber identity is associated with a particular subscriber the request 50 is related to. The subscriber in turn is associated with a particular tenant of the multi-tenant network.

Then, at 310, the SDL 110 obtains the identity of the tenant-specific database 220 maintaining the subscription data needed to process the request 50. This may be accomplished on the basis of the subscriber identifier in the request as received from the client node 500. The identity of the tenant-specific database is embedded in the request 50.

Then, the request 50 including the embedded identity is forwarded to the LD 120.

At 320, the LD 120 selects the FE 150 for handling the request 50 from a plurality of FEs. The selection is based on a load distribution mechanism. Details of such a load distribution mechanism are known and will not be further discussed herein.

The request 50 is then forwarded to the selected FE 150, e.g. using the Cx interface or the Sh interface.

At 330, the FE 150 extracts the identity of the tenant-specific database 220 from the request 50. The request 50 is then processed, and the tenant-specific database 220 corresponding to the extracted identity is accessed so as to obtain the information needed for processing the request 50. The corresponding exchange of information between the FE 150 and the tenant-specific database 220 is illustrated at 60.

Results of processing the request 50 may be propagated from the FE 150 back to the client node 300, e.g. via the SDL 110 or using other communication lines. However, results of processing the request 50 may also be propagated to other network instances not shown in Fig. 4.

As mentioned above, due to the possibility of the subscriber identifier being ported from one network operator to another network operator, problems may arise when obtaining the identity of the tenant-specific database 220 in the subscription data locator 110. One way of addressing this problem is to obtain the identity of the tenant-specific database 220 taking into account number portability information, e.g. as provided by the number portability database 118 of Fig. 2. As an alternative or in addition, e.g. in case the number portability information is incomplete or incorrect, a try-and-error mechanism may be applied in order to retrieve the subscription data needed to process the request 50. That is to say, after accessing the tenant-specific database 220 corresponding to the identity embedded in the request 50, it may be verified whether the subscription data have been successfully retrieved from the tenant-network specific database 220. If it was not possible to retrieve the subscription data from the tenant-network specific database 220, another tenant-specific database may be accessed so as to obtain the subscription data. This process may be repeated until a tenant-specific database provides a successful response or all tenant-specific databases have been tried. The repeated access of different tenant-specific databases may be controlled by the database selector 152 in the FE. However, it is also possible to control the repeated access of different tenant-specific databases in the subscription data locator 110, e.g. by embedding a different identity into the request 50 and forwarding this request 50 to the FE 150.

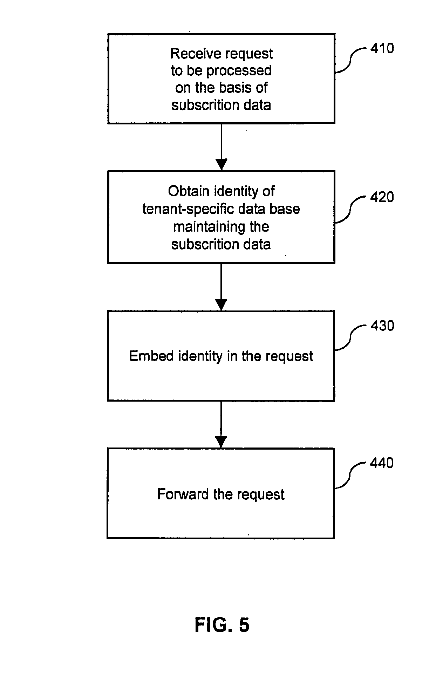

Fig. 5 shows a flowchart illustrating a method according to an embodiment of the invention. The method may be implemented in a subscription data locator 110 as described above.

At step 410, a request to be processed on the basis of subscription data is received in a network instance shared by multiple tenants. This network instance may be the above-described subscription data locator 110.

At step 420, an identity of a tenant-specific database maintaining the subscription data is obtained. This may be accomplished on the basis of a subscriber identity included within the received request. Further, the identity may be obtained taking into account number portability information.

At step 430, the identity is embedded in the request.

At step 440, the request is forwarded to a further network instance, e.g. to the above-described FE instance 150-1, 150-n, 150. The further network instance may then use the embedded identity so as to select the tenant-specific database when processing the request.

According to some embodiments, the further network instance is shared by the multiple tenants as well.

In the above examples, different protocols may be used for implementing the communication between the participating network instances, in particular between the subscription data locator and the FE. For example, such protocols may be the Diameter Protocol, the Radius Protocol or the Mobile Application Part (MAP) protocol.

Moreover, it is to be noted that according to the above description the FE is located in the shared domain and interprets the identity embedded in the request so as to select the tenant-specific database. However, it may also be possible that a BE is provided which has some type of internal layering, with an upper layer in charge of functions such as processing requests from one or more FEs and locating the requested data, and a lower layer for data storage. In such a case, the above-described principles could be applied in such a way that the upper layer of the BE interprets the identity embedded into the request and selects the tenant-specific database in the lower layer on the basis of the embedded identity. In this scenario, a single BE instance could hold multiple tenant-specific databases.

The concepts as described above allow for implementing a functional entity maintaining subscription data in accordance with the DLA, at the same time complying with the specific requirements of multi-tenant networks. In particular, subscription data may be held in tenant-specific domains, thereby ensuring privacy, and at the same time network elements and instances may be efficiently shared by different tenants. Accordingly, the solutions as described above allow for a high efficiency. By avoiding redundant network instances, costs may be reduced.

It is to be understood that the concepts as explained above are merely exemplary and susceptible to various modifications. For example, different network components have been described for implementing the subscription data locator and the FE. However, it is also possible to integrate the subscription data locator and one or more FEs in a single network component. Also, the concepts as described above may be used in connection with an arbitrary number of FEs and an arbitrary number of tenant-specific domains.

## Claims

1. A method of locating subscription data in a multi-tenant network, comprising:
receiving, in a network instance (110) shared by multiple tenants, a request (50) to be processed by a further network instance (150-1, 150-n; 150) on the basis of subscription data;
the network instance (110) obtaining an identity of a tenant-specific data base (220A, 220B; 220) maintaining said subscription data;
the network instance (110) embedding said identity in the request (50); and
the network instance (110) forwarding the request (50) to the further network instance (150-1, 150-n; 150), the further network instance (150-1, 150-n; 150) being configured to select, on the basis of said embedded identity, the tenant-specific database (220A, 220B, 220-y) to be accessed when processing the request (50).

2. The method according to claim 1,
wherein said further network instance (150-1, 150-n; 150) is shared by said multiple tenants.

3. The method according to claims 1 or 2, comprising:
receiving the forwarded request (50) in the further network instance (150-1, 150-n; 150);
extracting the embedded identity from the request (50); and
selecting the tenant-specific data base (220A, 220B; 220) corresponding to the extracted identity to be accessed when processing the request (50).

4. The method according to any one of the preceding claims, comprising:
selecting the further network instance (150-1, 150-n; 150) on the basis of a load distribution mechanism.

5. The method according to any one of the preceding claims,
wherein the request (50) comprises a subscriber identity; and
wherein the identity of the data base (220A, 220B; 220) is obtained on the basis of said subscriber identity.

6. The method according to any one of the preceding claims,
wherein the identity of the data base (220A, 220B; 220) is obtained taking into account number portability information.

7. The method according to claim 6, comprising:
retrieving the number portability information from a number portability data base (118).

8. The method according to claim 7,
wherein the number portability database (118) is associated with said network instance (110).

9. The method according to any one of the preceding claims, comprising:
verifying whether said subscription data have been successfully retrieved from the tenant-network specific data base (220A, 220B; 220); and
if said subscription data have not been successfully retrieved from the tenant-network specific data base (220A, 220B; 220) accessing another tenant-specific data base (220A, 220B; 220) so as to retrieve said subscription data.

10. The method according to any one of the preceding claims,
wherein the further network instance (150-1, 150-n; 150) is an application logic instance.

11. A network component for a multi-tenant network, comprising:
a subscription data locator (110) shared by multiple tenants,
the subscription data locator (110) comprising a first interface (10) configured to receive a request (50) to be processed by a network instance (150-1, 150-n; 150) on the basis of subscription data and a second interface (20) configured to forward the request (50) to the network instance (150-1, 150-n; 150),
said subscription data locator (110) being configured to obtain an identity of a tenant specific data base (220A, 220B; 220) maintaining the said subscription data and to embed the identity into the forwarded request (50), thereby enabling the network instance (150-1, 150-n; 150) receiving the forwarded request (50) to select, on the basis of said embedded identity, the tenant-specific database (220A, 220B; 220) to be accessed when processing the request (50).

12. The network component according to claim 11,
wherein the subscription data locator (110) is configured to operate in accordance with a method as defined in any one of claims 1-10.

13. A network component for a multi-tenant network, comprising:
a data base selector (152), and
a network instance (150-1, 150-n; 150) configured to process a request (50) on the basis of subscription data maintained in a tenant-specific database (220A, 220B; 220),
said data base selector (152) being configured to receive the request (50) from a network instance (110) shared by multiple tenants, to extract an embedded identity of the tenant-specific data base (220A, 220B; 220) from the request (50), and to select the tenant-specific data base (220A, 220B; 220) corresponding to the extracted identity to be accessed by the network instance (150-1, 150-n; 150) when processing the request (50).

14. The network component according to claim 13,
wherein the data base selector (152) is configured to operate in accordance with a method as defined in any one of claims 1-10.

15. A network system comprising a network component according to claim 11 or 12 and a network component according to claim 13 or 14.

## Patentansprüche

1. Verfahren zur Lokalisierung von Subskriptionsdaten in einem Mehrmieternetz, umfassend:
Empfangen in einer Netzinstanz (110), die durch mehrere Mieter gemeinsam genutzt wird, einer Anforderung (50), die durch eine weitere Netzinstanz (150-1, 150-n; 150) auf der Basis von Subskriptionsdaten verarbeitet werden soll;
wobei die Netzinstanz (110) eine Kennung einer mieterspezifischen Datenbank (220A, 220B; 220) erhält, welche die Subskriptionsdaten führt;
die Netzinstanz (110) die Kennung in die Anforderung (50) einbettet; und
die Netzinstanz (110) die Anforderung (50) an die weitere Netzinstanz (1501, 150-n; 150) weiterleitet, wobei die weitere Netzinstanz (150-1, 150-n; 150) so konfiguriert ist, dass sie auf der Basis der eingebetteten Kennung die mieterspezifische Datenbank (220A, 220B, 220-y) auswählt, auf die beim Verarbeiten der Anforderung (50) zugegriffen werden soll.

2. Verfahren nach Anspruch 1,
wobei die weitere Netzinstanz (150-1, 150-n; 150) durch die mehreren Mieter gemeinsam genutzt wird.

3. Verfahren nach Anspruch 1 oder 2, umfassend:
Empfangen der Weiterleitungsanforderung (50) in der weiteren Netzinstanz (150-1, 150-n; 150);
Extrahieren der eingebetteten Kennung aus der Anforderung (50);
Auswählen einer mieterspezifischen Datenbank (220A, 220B; 220), die der extrahierten Kennung (50) entspricht und auf die beim Verarbeiten der Anforderung (50) zugegriffen werden soll.

4. Verfahren nach einem der vorhergehenden Ansprüche, umfassend:
Auswählen der weiteren Netzinstanz (150-1, 150-n; 150) auf der Basis eines Lastverteilungsmechanismus.

5. Verfahren nach einem der vorhergehenden Ansprüche,
wobei die Anforderung (50) eine Teilnehmerkennung umfasst; und
wobei die Kennung der Datenbank (220A, 220B; 220) auf der Basis der Teilnehmerkennung erhalten wird.

6. Verfahren nach einem der vorhergehenden Ansprüche,
wobei die Kennung der Datenbank (220A, 220B; 220) unter Berücksichtigung von Nummernübertragbarkeits-Informationen erhalten wird.

7. Verfahren nach Anspruch 6, umfassend:
Abrufen der Nummernübertragbarkeits-Informationen von einer Nummernübertragbarkeits-Datenbank (118).

8. Verfahren nach Anspruch 7,
wobei die Nummernübertragbarkeits-Datenbank (118) mit der Netzinstanz (110) verbunden ist.

9. Verfahren nach einem der vorhergehenden Ansprüche, umfassend:
Prüfen, ob die Subskriptionsdaten erfolgreich von der mieternetzspezifischen Datenbank (220A, 220B; 220) abgerufen wurden; und
Zugreifen, wenn die Subskriptionsdaten nicht erfolgreich von der mieternetzspezifischen Datenbank (220A, 2208; 220) abgerufen wurden, auf eine andere mieterspezifische Datenbank (220A, 2208; 220), um die Subskriptionsdaten abzurufen.

10. Verfahren nach einem der vorhergehenden Ansprüche,
wobei die weitere Netzinstanz (150-1, 150-n; 150) eine Anwendungslogik-Instanz ist.

11. Netzkomponente für ein Mehrmieternetz, umfassend:
einen Subskriptionsdatensucher (110), der durch mehrere Mieter gemeinsam genutzt wird,
wobei der Subskriptionsdatensucher (110) eine erste Schnittstelle (10), die so konfiguriert ist, dass sie eine Anforderung (50) empfängt, die durch eine Netzinstanz (150-1, 150-n; 150) auf der Basis von Subskriptionsdaten verarbeitet werden soll, und eine zweite Schnittstelle (20) umfasst, die so konfiguriert ist, dass sie die Anforderung (50) an die Netzinstanz (150-1, 150-n; 150) weiterleitet,
der Subskriptionsdatensucher (110) so konfiguriert ist, dass er eine Kennung einer mieterspezifischen Datenbank (220A, 220B; 220) erhält, welche die Subskriptionsdaten führt, und die Kennung in die weitergeleitete Anforderung (50) einbettet, um die Netzinstanz (150-1, 150-n; 150), welche die weitergeleitete Anforderung (50) empfängt, zu befähigen, auf der Basis der eingebetteten Kennung die mieterspezifische Datenbank (220A, 220B; 220) auszuwählen, auf die beim Verarbeiten der Anforderung (50) zugegriffen werden soll.

12. Netzkomponente nach Anspruch 11,
wobei der Subskriptionsdatensucher (110) so konfiguriert sind, dass er gemäß einem Verfahren, wie nach einem der Ansprüche 1 bis 10 definiert, arbeitet.

13. Netzkomponente für ein Mehrmieternetz, umfassend:
einen Datenbankwähler (152), und
eine Netzinstanz (150-1, 150-n; 150), die so konfiguriert ist, dass sie eine Anforderung (50) auf der Basis von Subskriptionsdaten verarbeitet, die in einer mieterspezifischen Datenbank (220A, 2208; 220) geführt werden,
wobei der Datenbankwähler (152) so konfiguriert ist, dass er die Anforderung (50) von einer Netzinstanz (110) empfängt, die durch mehrere Mieter gemeinsam genutzt wird, um eine eingebettete Kennung der mieterspezifischen Datenbank (220A, 220B; 220) aus der Anforderung (50) zu extrahieren, und die mieterspezifische Datenbank (220A, 220B; 220) auszuwählen, die der extrahierten Kennung entspricht und auf die durch die Netzinstanz (150-1, 150-n; 150) beim Verarbeiten der Anforderung (50) zugegriffen werden soll.

14. Netzkomponente nach Anspruch 13,
wobei der Datenbankwähler (152) so konfiguriert sind, dass er gemäß einem Verfahren, wie nach einem der Ansprüche 1 bis 10 definiert, arbeitet.

15. Netzsystem, umfassend eine Netzkomponente nach Anspruch 11 oder 12 und eine Netzkomponente nach Anspruch 13 oder 14.

## Revendications

1. Procédé de localisation de données d'abonnement dans un réseau multi-locataires (« multi-tenant »), comprenant de :
recevoir, dans une instance de réseau (110) partagée par des locataires multiples, une demande (50) à traiter par une autre instance de réseau (150-1, 150-n ;150) sur la base des données d'abonnement ;
l'instance de réseau (110) obtenant une identité d'une base de données spécifique au locataire (220A,220B ;220) conservant lesdites données d'abonnement ;
l'instance de réseau (110) incorporant ladite identité dans la demande (50) ; et
l'instance de réseau (110) acheminant la demande (50) vers l'autre instance de réseau (150-1,150-n ;150), l'autre instance de réseau (150-1,150-n ;150) étant configurée afin de sélectionner, sur la base de ladite identité incorporée, la base de données spécifique au locataire (220A,220B,220-y) à accéder lors du traitement de la demande (50).

2. Procédé selon la revendication 1, dans lequel ladite autre instance de réseau (150-1,150-n ;150) est partagée par lesdits locataires multiples.

3. Procédé selon les revendications 1 ou 2, comprenant de :
recevoir la demande acheminée (50) dans l'autre instance de réseau (150-1,150-n ;150) ;
extraire l'identité incorporée de la demande (50) ; et
sélectionner la base de données spécifique au locataire (220A,220B ;220) correspondant à l'identité extraite à accéder lors du traitement de la demande (50).

4. Procédé selon une quelconque des revendications précédentes, comprenant de :
sélectionner l'autre instance de réseau (150-1,150-n ;150) sur la base d'un mécanisme de distribution de charge.

5. Procédé selon une quelconque des revendications précédentes, dans lequel la demande (50) comprend une identité d'abonnement ; et dans lequel l'identité de la base de données (220A,220B ;220) est obtenue sur la base de ladite identité d'abonné.

6. Procédé selon une quelconque des revendications précédentes, dans lequel l'identité de la base de données (220A,220B ;220) est obtenue en prenant en compte une information de portabilité de numéro.

7. Procédé selon la revendication 6, comprenant de :
extraire l'information de portabilité de numéro d'une base de données de portabilité de numéro (118).

8. Procédé selon la revendication 7, dans lequel la base de données de portabilité de numéro (118) est associée à ladite instance de réseau (110).

9. Procédé selon une quelconque des revendications précédentes, comprenant de :
vérifier si lesdites données d'abonnement ont été extraites avec succès de la base de données spécifique au réseau du locataire (220A,220B ;220) ; et
si lesdites données d'abonnement n'ont pas été extraites avec succès de la base de données spécifique au réseau du locataire (220A,220B ;220), accéder à un autre base de données spécifique du locataire (220A,220B ;220) de manière à extraire lesdites données d'abonnement.

10. Procédé selon une quelconque des revendications précédentes, dans lequel l'autre instance de réseau (150-1,150-n ;150) est une instance logique d'application.

11. Composant de réseau pour un réseau multi-locataires, comprenant :
un localisateur de données d'abonnement (110) partagé par des locataires multiples,
le localisateurs de données d'abonnement (110) comprenant une première interface (10) configurée afin de recevoir une demande (50) à traiter par une instance de réseau (150-1,150-n ;150) sur la base des données d'abonnement et une seconde interface (20) configurée afin d'acheminer la demande (50) vers l'instance de réseau (150-1,150-n ;150),
ledit localisateur de données d'abonnement (110) étant configuré afin d'obtenir une identité d'une base de données spécifique au locataire (220A,220B ;220) conservant lesdites données d'abonnement et d'incorporer l'identité dans la demande acheminée (50), en permettant ainsi à l'instance de réseau (150-1,150-n ;150) recevant la demande acheminée (50) de sélectionner, sur la base de ladite identité incorporée, la base de données spécifique au locataire (220A,220B ;220) à accéder lors du traitement de la demande (50).

12. Composant de réseau selon la revendication 11, dans lequel le localisation de données d'abonnement (110) est configuré afin de fonctionnement selon un procédé tel que défini dans une quelconque des revendications 1-10.

13. Composant de réseau pour un réseau multi-locataires, comprenant :
un sélecteur de base de données (152), et
une instance de réseau (150-1,150-n ;150) configurée afin de traiter une demande (50) sur la base de données d'abonnement conservées dans une base de données spécifiques au locataire (220A,220B ;220),
ledit sélecteur de base de données (152) étant configuré afin de recevoir la demande (50) depuis une instance de réseau (110) partagée par des locataires multiples, d'extraire une identité incorporée de la base de données spécifique au locataire (220A,220B ;220) de la demande (50), et de sélectionner la base de données spécifique du locataire (220A,220B ;220) correspondant à l'identité extraite à accéder par l'instance de réseau (150-1,150-n ;150) lors du traitement de la demande (50).

14. Composant de réseau selon la revendication 13, dans lequel le sélecteur de base de données (152) est configuré afin de fonctionner selon un procédé tel que défini dans une quelconque des revendications 1-10.

15. Système de réseau comprenant un composant de réseau selon les revendications 11 ou 12 et un composant de réseau selon les revendications 13 ou 14.
